# FASCICULE DE BREVET EUROPEEN

(11) **EP 3 651 961 B1**
(45) Date de publication et mention de la délivrance du brevet: **04.09.2024**
(21) Numéro de dépôt: 18752549.8
(22) Date de dépôt: 02.07.2018
(51) Int. Cl.: B29D 30/06, B29D 30/58, B29C 45/14, B29C 45/16, B29K 21/00, B29L 30/00

(54) **PROCÉDÉ DE FABRICATION D'UN BANDAGE PNEUMATIQUE AVEC UNE BANDE DE ROULEMENT PERFECTIONNÉE**
VERFAHREN ZUR HERSTELLUNG EINES LUFTREIFENS MIT VERBESSERTER LAUFFLÄCHE
METHOD FOR MANUFACTURING A PNEUMATIC TYRE WITH AN IMPROVED TREAD

(30) Priorité: 11.07.2017 FR 1756542
(43) Date de publication de la demande: 20.05.2020
(73) Titulaire: Compagnie Générale des Etablissements Michelin, 63000 Clermont-Ferrand (FR)
(72) Inventeur: PIALOT, Frédéric, 63040 Clermont-Ferrand Cedex 9 (FR); FABRE, Thomas, 63040 Clermont-Ferrand Cedex 9 (FR); WIEL, Pierre, 63040 Clermont-Ferrand Cedex 9 (FR)
(74) Mandataire: M.F.P. Michelin
(86) Numéro de dépôt international: PCT/FR2018/051635
(87) Numéro de publication internationale: WO 2019/012202

(56) Documents cités:
- EP-A1- 3 385 094
- DE-A1- 4 002 610
- FR-A1- 2 005 116
- FR-A1- 2 391 063
- FR-A1- 3 022 487
- US-A- 2 569 935
- US-A- 4 166 832

## Description

### DOMAINE TECHNIQUE DE L'INVENTION

La présente invention se rapporte à un procédé de fabrication d'un bandage pneumatique.

### ARRIÈRE-PLAN TECHNIQUE DE L'INVENTION

Les bandages pneumatiques sont habituellement formés de parties en matériaux caoutchoutiques comme des élastomères diéniques qui sont assemblées. Les bandages pneumatiques crus sont généralement fabriqués à partir de tambours en suivant des étapes connues de confection à plat sur un premier tambour, de conformation sur un deuxième tambour puis de finition. Une étape finale de cuisson permet à la matière crue plastique de devenir élastique notamment par vulcanisation. Un tel procédé de fabrication dure traditionnellement environ vingt minutes pour un bandage pneumatique tourisme.

En effet, le temps de cuisson est directement influencé par la masse du bandage pneumatique et donc du type de bandage pneumatique. Ainsi, pour un bandage pneumatique tourisme d'une dizaine de kilogrammes, le temps de cuisson est de l'ordre de dix minutes alors que pour des bandages pneumatiques poids lourds ou pour le génie civil pesant de plusieurs dizaines de kilogrammes jusqu'à plusieurs tonnes, le temps de cuisson varie de quarante minutes à plusieurs jours.

Pour des raisons écologique et qualitative, ces matériaux caoutchoutiques ont toujours besoin d'être optimisés afin de diminuer leur résistance au roulement et d'améliorer leurs performances (tenue chimique, tenue mécanique, etc.) tout en améliorant leur recyclabilité. Des exemples de fabrication de bandage pneumatique sont présentés dans les documents FR 2 005 116, US 2,569,935, EP 3 385 094 (relevant de l'article 54(3) CBE) et FR 3 022 487.

### RÉSUMÉ DE L'INVENTION

L'invention a pour but de fournir un nouveau procédé de fabrication d'un nouveau type de bandage pneumatique permettant de modifier significativement le coût de mise en oeuvre du procédé, les performances du bandage pneumatique ainsi que sa recyclabilité.

À cet effet, l'invention se rapporte à un procédé de fabrication d'un bandage pneumatique comportant les étapes suivantes :
a) former une carcasse à base de matériau caoutchoutique cru puis cuire la carcasse afin de la rendre élastique ;
b) surmouler, sur la carcasse cuite, au moins un matériau à base d'élastomère thermoplastique en injectant le matériau à base d'élastomère thermoplastique dans un moule afin de former, sur la carcasse, des flancs extérieurs et une bande de roulement.

Avantageusement selon l'invention, le procédé met en oeuvre de nouveaux types de matériaux à base d'un (ou plusieurs) élastomère(s) thermoplastique(s) (appelés parfois TPE provenant des termes anglais « thermoplastic elastomer »). On comprend donc que ces matériaux utilisés dans la fabrication du bandage pneumatique remplacent pour partie les matériaux caoutchoutiques traditionnels.

Selon l'invention, le remplacement concerne, de manière avantageuse, préférentiellement les matériaux externes au bandage pneumatique, c'est-à-dire la bande de roulement et les flancs extérieurs.

L'utilisation de ces matériaux à base d'élastomère thermoplastique permet en effet de modifier significativement les coûts de réalisation du bandage pneumatique ainsi que les performances finales. À titre d'exemple, la résistance au roulement, la tenue aux agressions extérieures (griffure, ozone, oxydation, etc.) peuvent être notablement améliorées par rapport aux matériaux caoutchoutiques. Enfin, ils sont recyclables.

Dans l'étape a), il est donc fabriqué une carcasse traditionnelle mais qui, selon l'invention, est cuite, c'est-à-dire notamment vulcanisée avant d'être partiellement surmoulée par au moins un matériau à base d'élastomère thermoplastique. Contrairement au procédé traditionnel, ce procédé met donc en oeuvre un matériau chaud sur un substrat (carcasse cuite) froid.

Selon d'autres caractéristiques optionnelles de réalisation de l'invention :
- l'étape a) comporte les phases a1) : fabriquer des matériaux caoutchoutiques crus, une nappe carcasse, deux tringles, une gomme intérieure imperméable à l'air et des nappes sommet de travail, a2) : confectionner à plat la carcasse à partir des matériaux caoutchoutiques crus, de la nappe carcasse, des deux tringles, de la gomme intérieure imperméable à l'air et des nappes sommet de travail, a3) : conformer la carcasse afin que les tringles soient en face l'une de l'autre, et a4) : cuire la carcasse afin de la rendre élastique ;
- l'étape b) comporte les phases b1) : ajuster la carcasse dans le moule, b2) : injecter le matériau à base d'élastomère thermoplastique sur la carcasse afin de former les flancs extérieurs et la bande de roulement, b3) : refroidir, dans le moule, l'ensemble obtenu lors de l'étape b2), et b4) : libérer le bandage pneumatique ainsi formé du moule ;
- lors de la phase b2), un premier matériau à base d'élastomère thermoplastique est injecté pour former les flancs extérieurs et un deuxième matériau à base d'élastomère thermoplastique est injecté pour former la bande de roulement, les premier et deuxième matériaux à base d'élastomère thermoplastique étant différents ;
- lors de l'étape b), le moule est maintenu à une température inférieure à 35 degrés Celsius ;
- la phase b3) permet la rigidification d'au moins la surface externe du matériau à base d'élastomère thermoplastique utilisé, en le refroidissant en-dessous d'une température déterminée fonction du matériau à base d'élastomère thermoplastique utilisé ;
- la température déterminée est la température de transition vitreuse ou la température de fusion du matériau à base d'élastomère thermoplastique utilisé ;
- le procédé comporte, entre l'étape a) et l'étape b), une étape c) destinée à modifier la surface de la carcasse afin d'améliorer l'adhérence du matériau de la carcasse avec le matériau de surmoulage de l'étape b) ;
- l'étape c) comporte une phase c1) destinée à augmenter la surface de contact au niveau des parties de la carcasse qui recevront le surmoulage lors de l'étape b) ;
- la phase c1) comporte un moulage destiné à former des structures en relief sur les parties de la carcasse qui recevront le surmoulage lors de l'étape b) ou un traitement mécanique ou chimique destiné à augmenter la rugosité des parties de la carcasse qui recevront le surmoulage lors de l'étape b) ;
- l'étape c) comporte une phase c2) destinée à former une couche de liaison sur des parties de la carcasse qui recevront le surmoulage lors de l'étape b) ;
- la phase c2) comporte un dépôt d'une couche de liaison sur les parties de la carcasse qui recevront le surmoulage lors de l'étape b) ou la formation de liaisons chimiques des parties de la carcasse qui recevront le surmoulage lors de l'étape b).

### BRÈVE DESCRIPTION DES DESSINS

D'autres particularités et avantages ressortiront clairement de la description qui en est faite ci-après, à titre indicatif et nullement limitatif, en référence aux dessins annexés, dans lesquels :
- La figure 1 est une vue en coupe partielle d'une carcasse de bandage pneumatique obtenue selon une première étape d'un procédé selon l'invention ;
- La figure 2 est une vue en coupe partielle d'un bandage pneumatique obtenu selon un premier mode de réalisation du procédé selon l'invention ;
- La figure 3 est une vue en coupe partielle d'un bandage pneumatique obtenu selon un deuxième mode de réalisation du procédé selon l'invention ;
- La figure 4 est une vue en coupe partielle d'un moule pour la mise en oeuvre des premier et deuxième modes de réalisation du procédé selon l'invention ;
- La figure 5 est une vue en coupe partielle d'un moule pour la mise en oeuvre des premier et deuxième modes de réalisation du procédé selon l'invention après la mise en place de la carcasse ;
- La figure 6 est une vue en coupe partielle d'un moule pour la mise en oeuvre des premier et deuxième modes de réalisation du procédé selon l'invention après l'injection de flancs extérieurs et d'une bande de roulement.

### DESCRIPTION DÉTAILLÉE D'AU MOINS UN MODE DE RÉALISATION DE L'INVENTION

Sur les différentes figures, les éléments identiques ou similaires portent les mêmes références, éventuellement additionné d'un indice. La description de leur structure et de leur fonction n'est donc pas systématiquement reprise.

Par « matériau caoutchoutique », on entend un matériau thermodurcissable tel un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « bande de roulement », on entend une quantité de matériau délimitée par des surfaces latérales et par deux surfaces principales dont l'une, appelée surface de roulement, est destinée à entrer en contact avec une chaussée lorsque le pneumatique roule.

Par « carcasse », on entend toute partie n'appartenant pas aux flancs extérieurs ou à la bande de roulement.

Par « matériau à base d'élastomère thermoplastique », on entend un matériau comportant tout ou partie de copolymères à blocs, constitués de blocs rigides, thermoplastiques, reliés par des blocs souples, élastomères. De tels matériaux présentent un comportement mécanique à la fois d'un élastomère et d'un polymère thermoplastique.

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg. Dans le cas spécifique d'un polymère (ou d'un bloc de polymère) semicristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température déterminée pour la mise oeuvre.

Les blocs élastomères peuvent être tous les élastomères connus de l'homme de l'art.

À titre d'exemple nullement limitatif de matériau à base d'élastomère thermoplastique, on peut citer par exemple des matériaux comportant au moins en partie des blocs du type SIS, SBS, SEBS ou SIBS (cf. référence AM3400 V1, « Élastomères thermoplastiques (TPE) », Michel Biron, Techniques de l'ingénieur, 10 juillet 2000).

L'invention s'applique à tout type de bandage pneumatique, notamment ceux destinés à équiper des véhicules à moteur de type tourisme, SUV (« Sport Utility Vehicles »), deux roues (notamment motos), avions, véhicules industriels choisis parmi camionnettes, "Poids-lourds" - c'est-à-dire métro, bus, engins de transport routier (camions, tracteurs, remorques), véhicules hors-la-route tels qu'engins agricoles ou de génie civil -, ou autres véhicules de transport ou de manutention.

L'invention se rapporte à un procédé de fabrication d'un bandage pneumatique 1 comportant une carcasse 3 à base de matériau caoutchoutique et des flancs extérieurs 5 et une bande de roulement 7 en au moins un matériau à base d'élastomère thermoplastique.

Selon un premier mode de réalisation, le procédé comporte une première étape a) destinée à former une carcasse 3 à base de matériau caoutchoutique cuit, c'est-à-dire à base de matériau caoutchoutique cru qui est ensuite cuit afin de rendre la carcasse élastique. En effet, contrairement au procédé habituel dans lequel une étape finale de cuisson permet à toute la matière crue plastique de devenir élastique, dans le procédé selon l'invention, seule la carcasse 3 est cuite afin de devenir élastique. Toutefois, la carcasse 3 peut être obtenue selon les étapes habituelles de fabrication avant cuisson.

À titre nullement limitatif, l'étape a) peut ainsi comporter une première phase a1) destinée à fabriquer des matériaux caoutchoutiques crus, une nappe carcasse 2, deux tringles 4, une gomme intérieure 6 imperméable à l'air et des nappes sommet de travail 8. Les tringles 4 sont préférentiellement métalliques et les nappes sommet de travail 8 peuvent être formées d'un composite à base de verre et/ou d'un composite à base de fibres de carbone et/ou d'un tissu tramé et/ou d'un métal suivant le type de bandage pneumatique.

L'étape a) peut ensuite comporter une deuxième phase a2) destinée à confectionner à plat la carcasse 3 sur un premier tambour (non représenté) à partir des matériaux caoutchoutiques crus, de la nappe carcasse 2, des deux tringles 4, de la gomme intérieure 6 imperméable à l'air et des nappes sommet de travail 8 réalisés lors de la phase a1). Ensuite, le procédé peut se poursuivre avec une troisième phase a3) destinée à conformer la carcasse 3 sur un deuxième tambour afin que les tringles 4 soient en face l'une de l'autre pour, par exemple, finir par une phase a4) destinée à cuire la carcasse afin de la rendre élastique, par exemple, par vulcanisation.

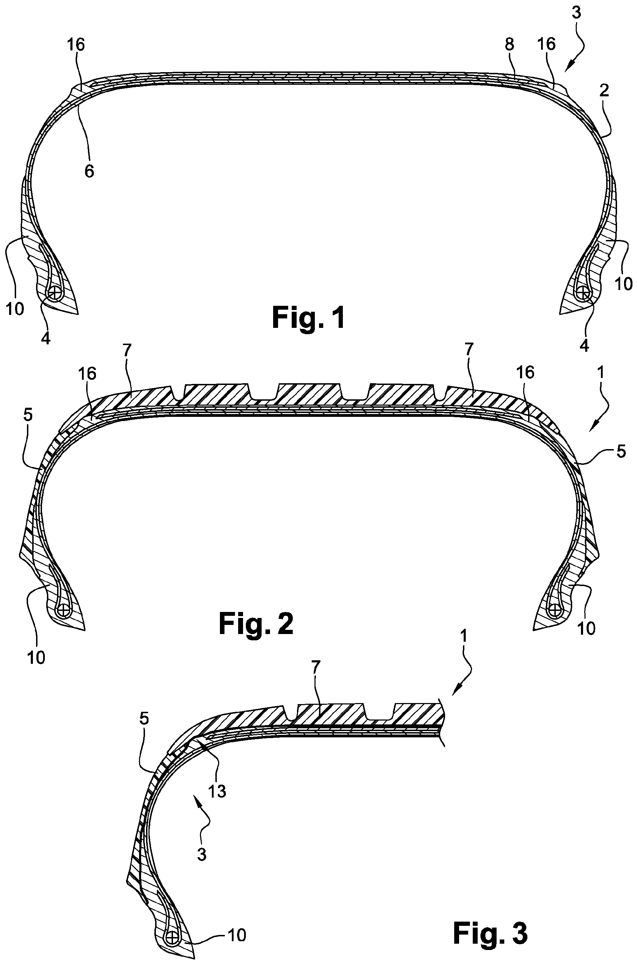

On obtient ainsi une carcasse 3 annulaire de section en forme de U (parfois appelée section Ω « oméga ») comme illustrée à la figure 1 avec notamment des pieds sommet 16 et des zones basses 10 destinées à s'assembler avec une roue de montage habituelle, parfois appelée jante (non représentée).

Avantageusement selon l'invention, le procédé se poursuit avec la deuxième étape b) destinée à surmouler, sur la carcasse 3 obtenue lors de l'étape a), au moins un matériau à base d'élastomère thermoplastique afin de terminer le bandage pneumatique 1 comme illustré à la figure 2. Préférentiellement, l'étape b) peut être obtenue par coulage ou par injection dans un moule 9.

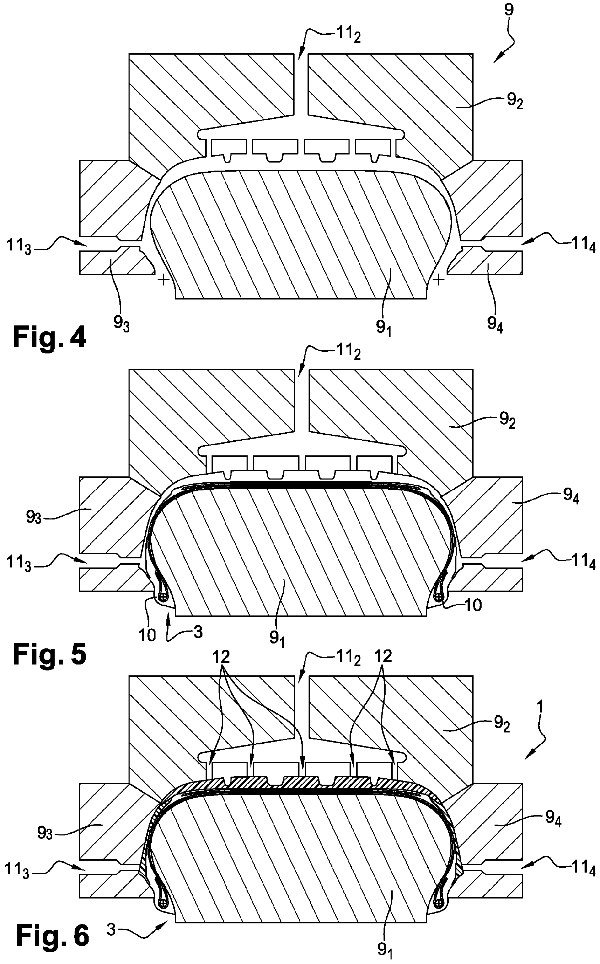

À titre nullement limitatif, un exemple de moule 9 selon l'invention est représenté à la figure 4. Il comporte un noyau 9, destiné à maintenir la forme interne du futur bandage pneumatique 1, un sommet 9₂ et deux flancs 9₃, 9₄. Comme visible à la figure 4, le sommet 9₂ et les deux flancs 9₃, 9₄ du moule 9 comportent chacun une conduite 11₂, 11₃, 11₄ pour alimenter le moule 9 en matériau à base d'élastomère thermoplastique. Préférentiellement, lors de l'étape b), le moule 9 est maintenu à une température inférieure à 35 degrés Celsius et, de manière encore plus préférée, autour de 20 degrés Celsius.

Comme illustré dans un exemple de l'invention aux figures 5 et 6, la deuxième étape b) peut ainsi comporter une première phase b1) destinée à ajuster la carcasse 3 dans le moule 9. Plus précisément, la surface interne de la carcasse 3 est ajustée sur la surface externe du noyau 9₁ et plaquée au niveau de ses zones basses 10 par les flancs 9₃, 9₄ du moule 9 comme illustré à la figure 5. On remarque que l'interstice, laissé entre la carcasse 3 et les sommet 9₂ et deux flancs 9₃, 9₄, forme alors l'espace de surmoulage souhaité.

La deuxième étape b) comporte ensuite une deuxième phase b2) destinée à injecter le matériau à base d'élastomère thermoplastique sur la carcasse 3 afin de former les flancs extérieurs 5 et la bande de roulement 7 du bandage pneumatique 1.

Le matériau peut ainsi être injecté dans une ou plusieurs des conduites 11₂, 11₃, 11₄ du moule 9 pour remplir l'interstice formé entre la carcasse 3 et respectivement le sommet 9₂ et les deux flancs 9₃, 9₄. L'injection (ou les injections) est préférentiellement réalisée à une température de mise en oeuvre sensiblement supérieure à la température de transition vitreuse (ou de fusion le cas échéant) du bloc thermoplastique du matériau injecté, comme, par exemple, supérieure à 200°C et est très rapide comme, par exemple, un temps inférieur à 10 secondes.

Préférentiellement, le (ou les) matériau(x) injecté(s) et plus généralement le bandage pneumatique obtenu, est maintenu dans le moule 9 dans une phase b3) afin de le refroidir en-dessous de la température de transition vitreuse (ou de fusion le cas échéant) du bloc thermoplastique du matériau à base d'élastomère thermoplastique pendant un temps inférieur à 60 secondes grâce à l'échange thermique avec le moule 9 maintenu à une température inférieure à 35 degrés Celsius comme expliqué ci-dessus.

Ainsi, il est souhaité de garantir le refroidissement d'au moins de la surface externe du (ou des) matériau(x) injecté(s), c'est-à-dire la surface en contact avec le moule 9, afin d'être suffisamment rigide pour ne pas coller au moule 9 et, par conséquent, faciliter sa libération. Bien entendu, suivant le type de bandage pneumatique (notamment son épaisseur) et la géométrie du moule 9, il peut également être souhaité que le refroidissement soit plus ou moins profond afin que la matière au centre des flancs extérieurs 5 et de la bande de roulement 7 ne se déforme pas lors de la future libération du moule 9.

À titre d'exemple, l'étape d'injection peut ainsi durer environ deux secondes et l'étape de refroidissement entre dix et vingt secondes pour la formation des flancs extérieurs 5 et de la bande de roulement 7 d'un bandage pneumatique tourisme.

La liaison entre le matériau à base d'élastomère thermoplastique et la carcasse 3 à base de matériau caoutchoutique cuit est favorisée par les pressions atteintes lors de l'injection préférentiellement supérieure à 1000 bars et la bonne mouillabilité du matériau à base d'élastomère thermoplastique qui, grâce à la température d'injection, se trouve dans sa phase liquide. Enfin l'étape b) se termine par la phase b4) destinée à libérer le bandage pneumatique 1 ainsi formé du moule 9.

Dans une variante préférée illustrée aux figures 2 et 6, lors de la phase b2), un premier matériau à base d'élastomère thermoplastique est injecté pour former les flancs extérieurs 5 et un deuxième matériau à base d'élastomère thermoplastique est injecté pour former la bande de roulement 7 afin d'optimiser leurs fonctions respectives, c'est-à-dire que les premier et deuxième matériaux à base d'élastomère thermoplastique sont différents et dédiés à leurs fonctions. Plus précisément, le premier matériau doit afficher une esthétique avantageuse pour recevoir les marquages réglementaires et être très résistant aux agressions mécaniques et chimiques (griffure, ozone, oxydation, etc.) tandis que le deuxième matériau doit être optimisé pour son contact avec le sol notamment quant à son adhérence sur sols sec et humide, son usure et son énergie (bruit et consommation).

Préférentiellement, les premier et deuxième matériaux sont injectés de sorte à ce que les fronts de matière se rejoignent entre les zones basses 10 et les pieds sommet 16 de la carcasse 3 comme mieux illustré à la figure 2. À la figure 6, on peut voir que le premier matériau est ainsi injecté par les conduites 11₃, 11₄ du moule 9 alors que le deuxième matériau est injecté par la conduite 11₂ du moule 9 qui se ramifie pour remplir l'interstice formé entre la carcasse 3 et le sommet 9₂ du moule 9 selon plusieurs ouvertures 12 débouchant en faisant face à la carcasse 3.

Avantageusement selon l'invention, le procédé permet d'obtenir de nouveaux types de bandage pneumatique 1 comportant au moins un matériau à base d'un (ou plusieurs) élastomère(s) thermoplastique(s). On comprend donc que le (ou les) matériau(x) utilisé(s) dans la fabrication du bandage pneumatique 1 remplacent pour partie les matériaux caoutchoutiques traditionnels en apportant des nouveaux avantages pour la bande de roulement 7 et les flancs extérieurs 5.

L'utilisation de ce(s) matériau(x) à base d'élastomère thermoplastique permet en effet de modifier significativement les coûts de réalisation du bandage pneumatique ainsi que les performances finales. À titre d'exemple, le temps de fabrication de la bande de roulement 7 est drastiquement diminué et la fabrication peut être réalisée en automatique. De plus, la résistance au roulement, la tenue aux agressions extérieures (griffure, ozone, oxydation, etc.) peuvent être notablement améliorée par rapport aux matériaux caoutchoutiques. Enfin, il(s) est (sont) recyclable(s).

Selon un deuxième mode de réalisation, le procédé comporte une même première étape a) destinée à former une carcasse 3 à base de matériau caoutchoutique cuit que dans le premier mode de réalisation avec les mêmes effets techniques et avantages. On obtient ainsi une carcasse 3 annulaire de section en forme de U (parfois appelée section Ω « oméga ») comme illustrée à la figure 1 avec notamment avec des pieds sommet 16 et une zone basse 10 destinée à s'assembler avec une roue de montage habituelle (non représentée).

Toutefois, avant de procéder à la mise en oeuvre de l'étape b), le procédé dans le deuxième mode de réalisation comporte une deuxième étape c) destinée à modifier la surface de la carcasse 3 afin d'améliorer l'adhérence du matériau de la carcasse 3 avec le matériau de surmoulage de la troisième étape b).

Selon une première variante, l'étape c) peut ainsi comporter une phase c1) destinée à augmenter la surface de contact au niveau des parties de la carcasse 3 qui recevront le surmoulage lors de l'étape b). Une telle phase c1) peut comprendre un moulage destiné à former des structures en relief sur les parties de la carcasse 3 qui recevront le surmoulage lors de l'étape b). On comprend donc que ce moulage pourrait notamment être réalisée en même temps que la phase a4) de cuisson de la carcasse 3.

Selon une autre possibilité, la phase c1) peut comprendre un traitement mécanique et/ou chimique destiné à augmenter la rugosité des parties de la carcasse 3 qui recevront le surmoulage lors de l'étape b).

Selon une deuxième variante, l'étape c) peut comporter une phase c2) destinée à former une couche de liaison sur des parties de la carcasse 3 qui recevront le surmoulage lors de l'étape b). La phase c2) pourrait ainsi comporter le dépôt d'une couche de liaison 13 particulièrement favorable à adhérer sur la carcasse 3 et le matériau qui sera surmoulé lors de la troisième étape b). On comprend qu'une (ou plusieurs) couche(s) de liaison 13 peuvent être déposés sur tout ou partie des parties de la carcasse 3 qui recevront le surmoulage lors de l'étape b). À titre d'exemple, la (ou les) couche(s) de liaison peut être un matériau à base d'élastomère thermoplastique ou un matériau diénique hybride comprenant un (ou plusieurs) matériau(x) à base d'élastomère thermoplastique.

Selon une autre possibilité, la phase c2) peut comprendre la mise en oeuvre d'une réaction chimique destinée à créer des liaisons chimiques entre la carcasse 3 et le matériau surmoulé lors de l'étape b). On comprend donc que cette réaction chimique pourrait notamment être réalisée en même temps que la phase b2) d'injection permettant une activation par la chaleur, la pression ou par un activateur extérieur.

Avantageusement selon le deuxième mode de réalisation de l'invention, le procédé se poursuit avec la troisième étape b) destinée à surmouler, sur la carcasse 3 obtenue lors de l'étape a) et modifiée lors de l'étape c), au moins un matériau à base d'élastomère thermoplastique afin de terminer le bandage pneumatique 1 comme illustré à la figure 3. Comme pour le premier mode de réalisation, la troisième étape b) peut être obtenue par coulage ou par injection dans un moule 9 avec les mêmes effets techniques et avantageuses que le premier mode de réalisation.

Avantageusement selon le deuxième mode de réalisation de l'invention, le procédé permet d'obtenir de nouvelles gammes de bandage pneumatique 1 comportant au moins un matériau à base d'un (ou plusieurs) élastomère(s) thermoplastique(s). On comprend donc que le (ou les) matériau(x) utilisé(s) dans la fabrication du bandage pneumatique 1 remplacent pour partie les matériaux caoutchoutiques traditionnels en apportant des nouveaux avantages pour la bande de roulement 7 et les flancs extérieurs 5.

L'utilisation de ce(s) matériau(x) à base d'élastomère thermoplastique permet en effet de modifier significativement les coûts de réalisation du bandage pneumatique ainsi que les performances finales. À titre d'exemple, le temps de fabrication de la bande de roulement 7 est drastiquement diminué et la fabrication est réalisée en automatique. De plus, la résistance au roulement, la tenue aux agressions extérieures (griffure, ozone, oxydation, etc.) peuvent être notablement améliorée par rapport aux matériaux caoutchoutiques. Enfin, il(s) est (sont) recyclable(s) et fabricable(s) à partir de sources vertes.

## Revendications

1. Procédé de fabrication d'un bandage pneumatique (1) comportant les étapes suivantes:
a) former une carcasse (3) à base de matériau caoutchoutique cru puis cuire la carcasse (3) afin de la rendre élastique ;
b) surmouler, sur la carcasse (3) cuite, au moins un matériau à base d'élastomère thermoplastique en injectant le matériau à base d'élastomère thermoplastique dans un moule (9) afin de former, sur la carcasse (3), des flancs extérieurs (5) et une bande de roulement (7).

2. Procédé selon la revendication précédente, dans lequel l'étape a) comporte les phases suivantes :
a1) fabriquer des matériaux caoutchoutiques crus, une nappe carcasse (2), deux tringles (4), une gomme intérieure (6) imperméable à l'air et des nappes sommet de travail (8) ;
a2) confectionner à plat la carcasse (3) à partir des matériaux caoutchoutiques crus, de la nappe carcasse (2), des deux tringles (4), de la gomme intérieure (6) imperméable à l'air et des nappes sommet de travail (8) ;
a3) conformer la carcasse (3) afin que les tringles (4) soient en face l'une de l'autre ;
a4) cuire la carcasse (3) afin de la rendre élastique.

3. Procédé selon la revendication 1 ou 2, dans lequel l'étape b) comporte les phases suivantes :
b1) ajuster la carcasse (3) dans le moule (9) ;
b2) injecter le matériau à base d'élastomère thermoplastique sur la carcasse (3) afin de former les flancs extérieurs (5) et la bande de roulement (7) ;
b3) refroidir, dans le moule (9), l'ensemble obtenu lors de l'étape b2) ;
b4) libérer le bandage pneumatique (1) ainsi formé du moule (9).

4. Procédé selon la revendication précédente, dans lequel, lors de la phase b2), un premier matériau à base d'élastomère thermoplastique est injecté pour former les flancs extérieurs (5) et un deuxième matériau à base d'élastomère thermoplastique est injecté pour former la bande de roulement (7), les premier et deuxième matériaux à base d'élastomère thermoplastique étant différents.

5. Procédé selon la revendication 3 ou 4, dans lequel, lors de l'étape b), le moule (9) est maintenu à une température inférieure à 35 degrés Celsius.

6. Procédé selon l'une quelconque des revendications 3 à 5, dans lequel la phase b3) permet la rigidification d'au moins la surface externe du matériau à base d'élastomère thermoplastique utilisé, en le refroidissant en-dessous d'une température déterminée fonction du matériau à base d'élastomère thermoplastique utilisé.

7. Procédé selon la revendication précédente, dans lequel la température déterminée est la température de transition vitreuse ou la température de fusion du matériau à base d'élastomère thermoplastique utilisé.

8. Procédé selon l'une quelconque des revendications précédentes, comportant, entre l'étape a) et l'étape b), une étape c) destinée à modifier la surface de la carcasse (3) afin d'améliorer l'adhérence du matériau de la carcasse (3) avec le matériau de surmoulage de l'étape b).

9. Procédé selon la revendication précédente, dans lequel l'étape c) comporte une phase c1) destinée à augmenter la surface de contact au niveau des parties de la carcasse (3) qui recevront le surmoulage lors de l'étape b).

10. Procédé selon la revendication précédente, dans lequel la phase c1) comporte un moulage destiné à former des structures en relief sur les parties de la carcasse (3) qui recevront le surmoulage lors de l'étape b).

11. Procédé selon la revendication 9, dans lequel la phase c1) comporte un traitement mécanique ou chimique destiné à augmenter la rugosité des parties de la carcasse (3) qui recevront le surmoulage lors de l'étape b).

12. Procédé selon la revendication 8, dans lequel l'étape c) comporte une phase c2) destinée à former une couche de liaison (13) sur des parties de la carcasse (3) qui recevront le surmoulage lors de l'étape b).

13. Procédé selon la revendication précédente, dans lequel la phase c2) comporte un dépôt d'une couche de liaison (13) sur les parties de la carcasse (3) qui recevront le surmoulage lors de l'étape b).

14. Procédé selon la revendication 12, dans lequel la phase c2) comporte la formation de liaisons chimiques des parties de la carcasse (3) qui recevront le surmoulage lors de l'étape b).

## Patentansprüche

1. Verfahren zur Herstellung eines Luftreifens (1), die folgenden Schritte umfassend:
a) Bilden einer Karkasse (3) auf der Basis von Rohkautschukmaterial, anschließend Vulkanisieren der Karkasse (3), um sie elastisch zu machen;
b) Aufformen, auf die vulkanisierte Karkasse (3), mindestens eines Materials auf der Basis von thermoplastischem Elastomer durch Einspritzen des Materials auf der Basis von thermoplastischem Elastomer in eine Form (9), um auf der Karkasse (3) äußere Seitenwände (5) und einen Laufstreifen (7) zu bilden.

2. Verfahren nach dem vorhergehenden Anspruch, wobei Schritt a) die folgenden Teilschritte umfasst:
a1) Herstellen von Rohkautschukmaterialien, einer Karkassenlage (2), zweier Wulstkerne (4), eines luftundurchlässigen inneren Gummis (6) und von Arbeitsscheitellagen (8);
a2) Konfektionieren der Karkasse (3) im flachen Zustand aus den Rohkautschukmaterialien, der Karkassenlage (2),
den zwei Wulstkernen (4), dem luftundurchlässigen inneren Gummi (6) und den Arbeitsscheitellagen (8);
a3) Formen der Karkasse (3), so dass die Wulstkerne (4) einander gegenüberliegen;
a4) Vulkanisieren der Karkasse (3), um sie elastisch zu machen.

3. Verfahren nach Anspruch 1 oder 2, wobei Schritt b) die folgenden Teilschritte umfasst:
b1) Ausrichten der Karkasse (3) in der Form (9);
b2) Spritzen des Materials auf der Basis von thermoplastischem Elastomer auf die Karkasse (3), um die äußeren Seitenwände (5) und den Laufstreifen (7) zu bilden;
b3) Kühlen, in der Form (9), der in Schritt b2) erhaltenen Anordnung;
b4) Befreien des so gebildeten Luftreifens (1) aus der Form (9).

4. Verfahren nach dem vorhergehenden Anspruch, wobei im Teilschritt b2) ein erstes Material auf der Basis von thermoplastischem Elastomer eingespritzt wird, um die äußeren Seitenwände (5) zu bilden, und ein zweites Material auf der Basis von thermoplastischem Elastomer eingespritzt wird, um den Laufstreifen (7) zu bilden, wobei das erste und das zweite Material auf der Basis von thermoplastischem Elastomer unterschiedlich sind.

5. Verfahren nach Anspruch 3 oder 4, wobei in Schritt b) die Form (9) auf einer Temperatur gehalten wird, die niedriger als 35 Grad Celsius ist.

6. Verfahren nach einem der Ansprüche 3 bis 5, wobei der Teilschritt b3) die Versteifung wenigstens der Außenfläche des verwendeten Materials auf der Basis von thermoplastischem Elastomer ermöglicht, indem es unter eine bestimmte Temperatur abgekühlt wird, die vom verwendeten Material auf der Basis von thermoplastischem Elastomer abhängig ist.

7. Verfahren nach dem vorhergehenden Anspruch, wobei die bestimmte Temperatur die Glasübergangstemperatur oder die Schmelztemperatur des Materials auf der Basis von thermoplastischem Elastomer ist.

8. Verfahren nach einem der vorhergehenden Ansprüche, welches zwischen Schritt a) und Schritt b) einen Schritt c) umfasst, der dazu bestimmt ist, die Oberfläche der Karkasse (3) zu verändern, um die Haftung des Materials der Karkasse (3) mit dem Überformungsmaterial von Schritt b) zu verbessern.

9. Verfahren nach dem vorhergehenden Anspruch, wobei Schritt c) einen Teilschritt c1) umfasst, der dazu bestimmt ist, die Kontaktfläche an den Teilen der Karkasse (3), die danach in Schritt b) überformt werden, zu vergrößern.

10. Verfahren nach dem vorhergehenden Anspruch, wobei der Teilschritt c1) ein Formen umfasst, das dazu bestimmt ist, auf den Teilen der Karkasse (3), die danach in Schritt b) überformt werden, Reliefstrukturen zu bilden.

11. Verfahren nach Anspruch 9, wobei der Teilschritt c1) eine mechanische oder chemische Bearbeitung umfasst, die dazu bestimmt ist, die Rauigkeit der Teile der Karkasse (3), die danach in Schritt b) überformt werden, zu erhöhen.

12. Verfahren nach Anspruch 8, wobei Schritt c) einen Teilschritt c2) umfasst, der dazu bestimmt ist, auf Teilen der Karkasse (3), die danach in Schritt b) überformt werden, eine Verbindungsschicht (13) zu bilden.

13. Verfahren nach dem vorhergehenden Anspruch, wobei der Teilschritt c2) eine Aufbringung einer Verbindungsschicht (13) auf die Teile der Karkasse (3), die danach in Schritt b) überformt werden, umfasst.

14. Verfahren nach Anspruch 12, wobei der Teilschritt c2) die Ausbildung chemischer Bindungen der Teile der Karkasse (3), die danach in Schritt b) überformt werden, umfasst.

## Claims

1. Process for manufacturing a pneumatic tyre (1), comprising the following steps:
a) forming a carcass (3) based on uncured rubber material and then curing the carcass (3) so as to make it elastic;
b) overmoulding on the cured carcass (3) at least one material based on thermoplastic elastomer by injecting the material based on thermoplastic elastomer in a mould (9) so as to form exterior sidewalls (5) and a tread (7) on the carcass (3).

2. Process according to the preceding claim, in which step a) includes the following phases:
a1) manufacturing uncured rubber materials, a carcass ply (2), two bead wires (4), an air-impermeable inner rubber (6) and crown plies (8).
a2) flat-manufacturing the carcass (3) from uncured rubber materials, the carcass ply (2), the two bead wires (4), the air-impermeable inner rubber (6) and the crown plies (8);
a3) shaping the carcass (3) so that the bead wires (4) are facing each other;
a4) curing the carcass (3) so as to make it elastic.

3. Process according to Claim 1 or 2, in which step b) includes the following phases:
b1) fitting the carcass (3) into a mould (9);
b2) injecting the material based on thermoplastic elastomer onto the carcass (3) so as to form exterior sidewalls (5) and a tread (7);
b3) cooling, in the mould (9), the assembly obtained during step b2);
b4) releasing the pneumatic tyre (1) thus formed from the mould (9).

4. Process according to the preceding claim, in which, during phase b2), a first material based on thermoplastic elastomer is injected to form the exterior sidewalls (5) and a second material based on thermoplastic elastomer is injected to form the tread (7), the first and second materials based on thermoplastic elastomer being different.

5. Process according to Claim 3 or 4, in which, during step b), the mould (9) is maintained at a temperature below 35°C.

6. Process according to any one of Claims 3 to 5, in which phase b3) allows rigidifying at least the outer surface of the material used based on thermoplastic elastomer by cooling it below a given temperature as a function of the material used based on thermoplastic elastomer.

7. Process according to the preceding claim, in which the given temperature is the glass transition temperature or the melting point of the material used based on thermoplastic elastomer.

8. Process according to any one of the preceding claims, including, between step a) and step b), a step c) for modifying the surface of the carcass (3) so as to improve the adhesion of the material of the carcass (3) to the overmoulding material of step b).

9. Process according to the preceding claim, in which step c) includes a phase c1) for increasing the area of contact on the parts of the carcass (3) which will receive the overmoulding during step b).

10. Process according to the preceding claim, in which phase c1) includes moulding for forming structures in relief on the parts of the carcass (3) which will receive the overmoulding during step b).

11. Process according to Claim 9, in which phase c1) includes a mechanical or chemical treatment for increasing the roughness of the parts of the carcass (3) which will receive the overmoulding during step b).

12. Process according to Claim 8, in which step c) includes a phase c2) for forming a bonding layer (13) on parts of the carcass (3) which will receive the overmoulding during step b).

13. Process according to the preceding claim, in which phase c2) includes deposition of a bonding layer (13) on the parts of the carcass (3) which will receive the overmoulding during step b).

14. Process according to Claim 12, in which phase c2) includes the formation of chemical bonds on the parts of the carcass (3) which will receive the overmoulding during step b).
